# EUROPEAN PATENT APPLICATION

(11) **EP 2 830 340 A1**
(43) Date of publication of application: **28.01.2015**
(21) Application number: 12871802.0
(22) Date of filing: 14.12.2012
(51) Int. Cl.: H04W 8/26, G06F 17/30

(54) **COMMUNICATION APPARATUS, COMMUNICATION-PURPOSE IDENTIFICATION INFORMATION MANAGING SERVER, COMMUNICATION-PURPOSE IDENTIFICATION INFORMATION ACQUIRING METHOD, COMMUNICATION-PURPOSE IDENTIFICATION INFORMATION PROVIDING METHOD, AND RECORDING MEDIUM**

(30) Priority: 19.03.2012 JP 2012061665
(71) Applicant: NEC Corporation, Tokyo 108-8001 (JP)
(72) Inventor: SAKATA, MASAYUKI, Tokyo 108-8001 (JP)
(74) Representative: Vossius & Partner
(86) International application number: PCT/JP2012/082501
(87) International publication number: WO 2013/140684

(57) **Abstract**

A communication device that communicates with a communication partner includes: update means that updates communication communication identification information of the communication device; registration means that, upon updating of the communication identification information of the communication device, registers in a server the communication identification information of the communication device that follows updating in association with search identification information of the communication device; and a control means that uses the search identification information of a communication partner to acquire from the server the communication identification information of the communication partner that is placed in association with the search identification information of the communication partner.

## Description

### Technical Field

The present invention relates to a communication device that performs wireless communication, a communication-purpose identification information management server, a communication-purpose identification information acquisition method, a communication-purpose identification information providing method, and a recording medium; and, for example, relates to a communication device that communicates with another communication device that is mounted in a vehicle as an onboard device, a communication-purpose identification information management server, a communication-purpose identification information acquisition method, a communication-purpose identification information providing method, and a recording medium.

### Background Art

Inter-vehicle communication, i.e., communication between vehicles, is a known technology. In inter-vehicle communication, wireless communication is carried out among communication devices that are mounted in vehicles.

Patent Document 1 discloses an onboard information processing device that performs wireless communication by using a vehicle ID (identifier) as communication identification information of a communication device that is mounted in a vehicle. The onboard information processing device described in Patent Document 1 uses communication identification information of a communication partner to designate the communication partner and perform one-to-one communication with the communication partner.

### Literature of the Prior Art

### Patent Documents

Patent Document 1: Japanese Unexamined Patent Application Publication No. 2010-

### Summary of the Invention

### Problem to be Solved by the Invention

The communication identification information, which is used in inter-vehicle communication, is altered at times to protect the privacy of the users of communication devices.

As a result, when the communication identification information (vehicle ID) of a communication partner changes, the onboard information processing device disclosed in Patent Document 1 becomes unable to identify the communication partner and communication with the communication partner becomes problematic.

The problem consequently arises that a method is needed for acquiring the new communication identification information of a communication partner.

It is an object of the present invention to provide a communication device, a communication-purpose identification information management server, a communication-purpose identification information acquisition method, a communication-purpose identification information providing method, and a recording medium that can solve the above-described problem.

### Means for Solving the Problem

The communication device of the present invention is a communication device that communicates with a communication partner and that includes:
update means that updates communication identification information of the communication device;
registration means that, upon updating of communication identification information of the communication device, registers in a server the communication identification information of the communication device that follows updating in association with search identification information of the communication device; and
control means that uses the search identification information of the communication partner to acquire from the server communication identification information of the communication partner that is placed in association with the search identification information of the communication partner.

The communication identification information management server of the present invention is a communication-purpose identification information management server that communicates with a first communication device and a second communication device and that includes:
storage means;
management means that, upon receiving from the first communication device a registration instruction that includes communication identification information of the first communication device and search identification information of the first communication device, stores the communication identification information of the first communication device in association with the search identification information of the first communication device in the storage means; and
providing means that, upon receiving from the second communication device a search request that contains search identification information of the first communication device, transmits to the second communication device communication identification information of the first communication device that is placed in association with the search identification information of the first communication device in the storage means.

The communication-purpose identification information acquisition method of the present invention is a method of acquiring communication identification information in a communication device that communicates with a communication partner and includes:
updating communication identification information of the communication device;
when communication identification information of the communication device is updated, registering in a server communication identification information of the communication device that follows updating in association with search identification information of the communication device; and
using the search identification information of the communication partner to acquire from the server communication identification information of the communication partner that is placed in association with the search identification information of the communication partner.

The communication-purpose identification information providing method of the present invention is a method of providing communication-purpose identification information in a communication-purpose identification information management server that communicates with a first communication device and a second communication device and includes:
upon receiving from the first communication device a registration instruction that contains communication identification information of the first communication device and search identification information of the first communication device, storing in storage means the communication identification information of the first communication device in association with the search identification information of the first communication device; and
upon receiving from the second communication device a search request that includes the search identification information of the first communication device, transmitting to the second communication device communication identification information of the first communication device that is placed in association with the search identification information of the first communication device in the storage means.

The recording medium of the present invention is a recording medium that can be read into a computer and on which is recorded a program for causing a computer to execute:
an updating procedure of updating communication identification information of the computer;
a registration procedure of, upon updating of communication identification information of the computer, registering in a server communication identification information of the computer that follows updating in association with the search identification information of the computer; and
a control procedure of using the search identification information of a communication partner to acquire communication identification information of the communication partner that has been placed in association with the search identification information of the communication partner.

The recording medium of the present invention is a recording medium that can be read by a computer and on which is recorded a program for causing a computer to execute:
a management procedure of, upon receiving from a first communication device a registration instruction that includes communication identification information of the first communication device and search identification information of the first communication device, storing the communication identification information of the first communication device in association with the search identification information of the first communication device in storage means; and
a providing procedure of, upon receiving from a second communication device a search request that includes search identification information of the first communication device, transmitting to the second communication device communication identification information of the first communication device that is placed in association with the search identification information of the first communication device in the storage means.

### Effect of the Invention

The present invention enables acquisition of new communication identification information of a communication partner.

### Brief Description of the Drawings

FIG. 1 is a block diagram showing communication system 100 that includes a server and communication devices of an exemplary embodiment of the present invention.
FIG. 2 is a block diagram showing an example of communication device 200.
FIG. 3 shows an example of a registration instruction.
FIG. 4 shows an example of a search request.
FIG. 5 is a block diagram showing an example of server 300.
FIG. 6 shows an example of a communication ID and a search ID in ID storage unit 302.
FIG. 7 shows an example of prohibition information 304a in black-list storage unit 304.
FIG. 8 shows an example of permission information 305a in white-list storage unit 305.
FIG. 9 is a sequence diagram for describing the operations of communication system 100.
FIG. 10 shows a communication device that is made up of update unit 203, registration unit 204, and control unit 205.
FIG. 11 shows a server that is made up of ID storage unit 302, management unit 303, and providing unit 306.

### Mode for Carrying Out the Invention

An exemplary embodiment of the present invention is next described with reference to the accompanying drawings.

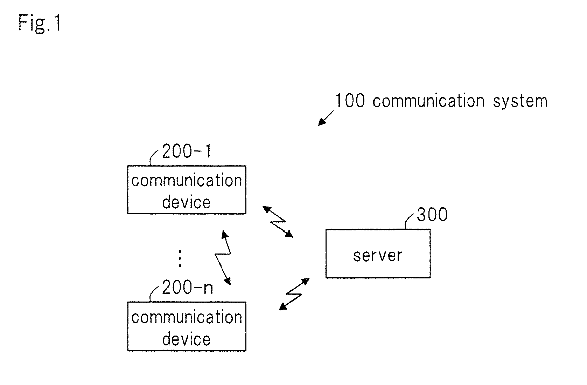

FIG. 1 is a block diagram showing communication system 100 that includes a server and communication devices of an exemplary embodiment of the present invention.

In FIG. 1, communication system 100 includes communication devices 200-1-200-n (where n is an integer equal to or greater than 2), and server 300.

Each of communication devices 200-1-200-n is mounted in a vehicle and performs inter-vehicle communication. In addition, each of communication devices 200-1-200-n communicates with server 300. Communication between communication devices 200-1-200-n and server 300 may be carried out by using a portable telephone communication network or may be carried out by using a communication network other than a portable telephone communication network.

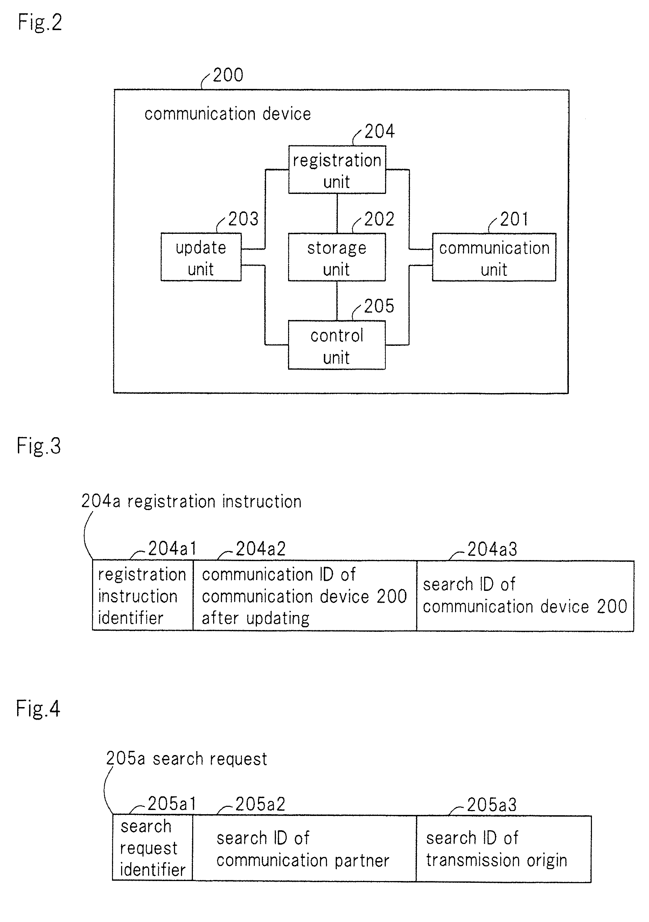

FIG. 2 is a block diagram showing an example of communication device 200 that is used as each of communication devices 200-1-200-n.

In FIG. 2, communication device 200 includes communication unit 201, storage unit 202, update unit 203, registration unit 204, and control unit 205.

Communication unit 201 performs wireless communication with other communication devices and server 300.

Storage unit 202 stores various types of information.

Storage unit 202 stores at least search identification information (hereinbelow referred to as "search ID") of communication device 200. The search ID may be the identification information of a portable telephone (such as the telephone number of the portable telephone) that belongs to the user of communication device 200, or may be an e-mail address of the user of communication device 200.

In the present exemplary embodiment, storage unit 202 stores search ID of a communication device that is the communication partner (hereinbelow referred to as simply "communication partner") of communication device 200.

For example, the user of communication device 200 acquires the search ID of the communication partner from the user of the communication partner beforehand, and then manipulates the input unit (not shown) of communication device 200 to register the search ID of this communication partner in storage unit 202. The method of acquiring the search ID of the communication partner is not limited to this form and can be modified as appropriate.

Update unit 203 is one example of updating means. Update unit 203 saves the communication identification information (hereinbelow referred to as the "communication ID") of communication device 200, and moreover, updates the communication ID.

Update unit 203 periodically (for example, every minute, every 30 minutes, or every hour) updates the communication ID. In addition, update unit 203 may also update the communication ID when the power-supply voltage is supplied to communication device 200. Update unit 203 saves the communication ID that follows updating.

The communication ID is used for specifying communication device 200 when communicating. The communication ID is, for example, the IP address of communication device 200.

Registration unit 204 is one example of registration means.

Registration unit 204, upon updating of the communication ID of communication device 200 by update unit 203, connects with server 300 by way of communication unit 201 and registers the communication ID of communication device 200 that follows updating in server 300 in association with the search ID of communication device 200 in storage unit 202.

In addition, when the communication ID of communication device 200 is updated while communication device 200 is engaged in communication, registration unit 204 registers the communication ID of communication device 200 that follows updating in server 300 in association with the search ID of communication device 200, and moreover, reports the communication ID of communication device 200 that follows updating by way of communication unit 201 to the partner with whom communication device 200 is communicating.

In the present exemplary embodiment, by transmitting to server 300 a registration instruction that includes the communication ID of communication device 200 that follows updating and the search ID of communication device 200 in storage unit 202, registration unit 204 registers in server 300 the communication ID of communication device 200 that follows updating in association with the search ID of communication device 200 in storage unit 202.

Registration unit 204 may also store the search ID of communication device 200 beforehand.

FIG. 3 shows an example of a registration instruction.

In FIG. 3, registration instruction 204a includes registration instruction identifier 204a1, communication ID 204a2 of communication device 200 that follows updating, and search ID 204a3 of communication device 200 in storage unit 202.

Control unit 205 is one example of control means.

Control unit 205 controls the operations of communication device 200.

Control unit 205 connects with server 300 by way of communication unit 201, and using the search ID of the communication partner in storage unit 202, acquires from server 300 the communication ID of the communication partner that is placed in association with the search ID of the communication partner.

For example, control unit 205 acquires the communication ID of the communication partner from server 300 by transmitting to server 300 a search request that contains at least the search ID of the communication partner.

In the present exemplary embodiment, when starting communication with a communication partner or when communication with a communication partner breaks down, control unit 205 transmits to server 300 a search request that includes the search ID of the communication partner and the search ID of the transmission origin of the search request (communication device 200). In the following explanation, the transmission origin of the search request is also referred to as the "transmission origin."

FIG. 4 shows an example of a search request.

In FIG. 4, search request 205a includes search request identifier 205a1, the search ID 205a2 of the communication partner, and search ID 205a3 of the transmission origin.

Control unit 205 uses the communication ID of the communication partner that was acquired to designate the communication partner and communicate with the communication partner by way of communication unit 201.

Control unit 205 may also store the search ID of the communication partner and the search ID of communication device 200 beforehand.

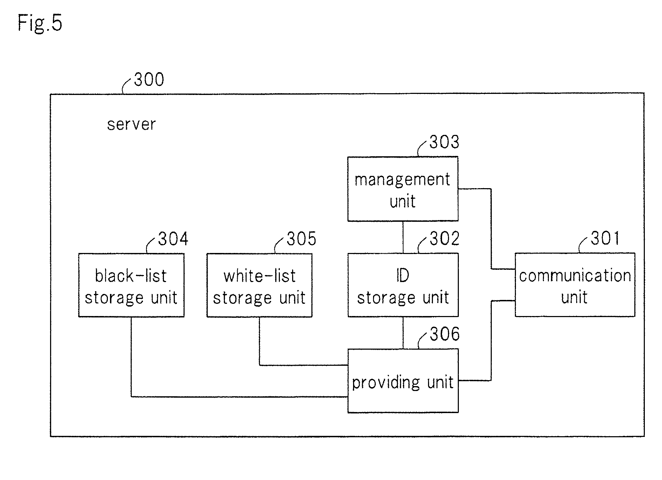

FIG. 5 is a block diagram showing an example of server 300.

Server 300 is one example of the communication-purpose identification information management server.

In FIG. 5, server 300 includes communication unit 301, ID storage unit 302, management unit 303, black-list storage unit 304, white-list storage unit 305, and providing unit 306.

Communication unit 301 performs wireless communication with each of communication devices 200-1-200-n.

ID storage unit 302 is one example of storage means. ID storage unit 302 stores communication IDs and search IDs in association with each other in units of communication devices.

Management unit 303 is one example of management means.

Management unit 303, upon receiving from any of communication devices 200-1-200-n (hereinbelow referred to as "communication device 200-a") by way of communication unit 301 a registration instruction that includes the communication ID of communication device 200-a and search ID of communication device 200-a, stores the communication ID of communication device 200-a and the search ID of communication device 200-a in association with each other in ID storage unit 302.

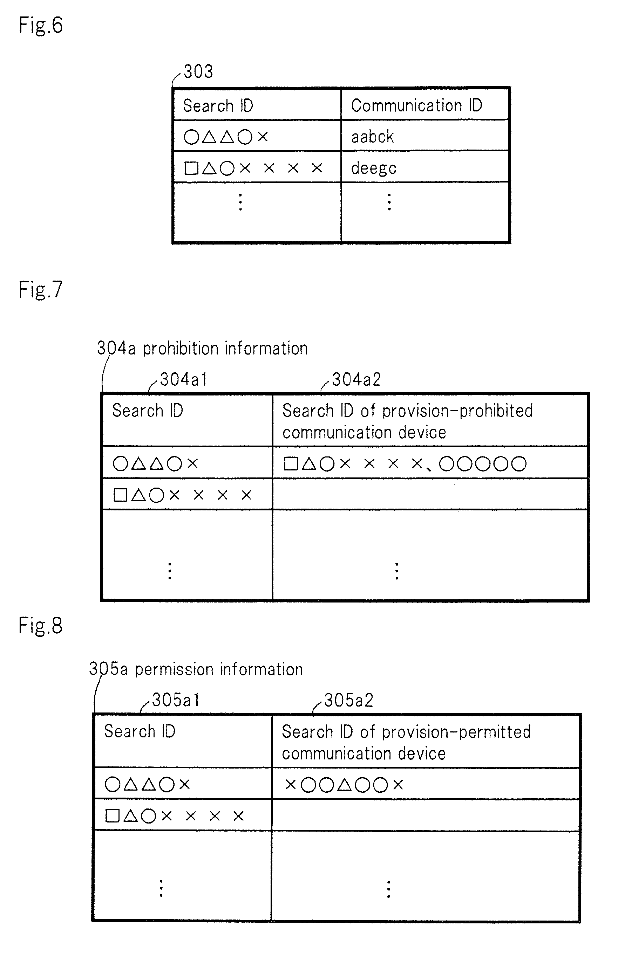

In the present exemplary embodiment, when management unit 303 receives a registration instruction that contains the communication ID of communication device 200-a and the search ID of communication device 200-a where another communication ID (communication ID that precedes updating) of communication device 200-a is present in ID storage unit 302, management unit 303 updates the other communication ID (the communication ID that precedes updating) of communication device 200-a in ID storage unit 302 to the communication ID of communication device 200-a that is shown in the registration instruction. FIG. 6 shows an example of the communication ID and search ID in ID storage unit 302.

Black-list storage unit 304 is one example of prohibition information storing means.

Black-list storage unit 304 stores prohibition information that indicates communication devices to which the provision of communication IDs in ID storage unit 302 is forbidden.

FIG. 7 shows an example of prohibition information 304a in black-list storage unit 304.

In FIG. 7, prohibition information 304a in black-list storage unit 304 indicates, for each search ID 304a1, search ID 304a1 and search ID 304a2 of a communication device to which the provision of a communication ID that is placed in association with search ID 304a1 is prohibited (hereinbelow referred to as "provision-prohibited communication device").

In FIG. 7, for example, a communication device that is specified by search ID 304a2 = "□Δ○××××" and a communication device that is specified by search ID 304a2 = "○○○○○" are shown as provision-prohibited communication devices to which the provision of communication ID = "aabck" that is placed in association with search ID 304a1 = "○ΔΔ○×" in ID storage unit 302 is prohibited.

White-list storage unit 305 is one example of permission information storing means.

White-list storage unit 305 stores permission information that indicates communication devices to which the provision of communication ID in ID storage unit 302 is permitted.

FIG. 8 shows an example of permission information 305a in white-list storage unit 305.

In FIG. 8, permission information 305a in white-list storage unit 305 indicates, for each search ID 305a1, search ID 305a1 and search ID 305a2 of a communication device to which the provision of the communication ID that is placed in association with search ID 305a1 is permitted (hereinbelow referred to as a "provision-permitted communication device").

In FIG. 8, for example, a communication device that is specified by the search ID 305a2 = "×○○Δ○○×" is shown as a provision-permitted communication device to which the provision of communication ID = "aabck" that is placed in association with search ID 305a1 = "○ΔΔ○×" in ID storage unit 302 is permitted.

Providing unit 306 is one example of providing means.

Providing unit 306, upon receiving from a communication device other than communication device 200-a among communication devices 200-1-200-n (hereinbelow referred to as "communication device 200-b") by way of communication unit 301 a search request that contains the search ID of communication device 200-a, transmits to communication device 200-b by way of communication unit 301 the communication ID of communication device 200-a that is placed in association with the search ID of communication device 200-a in ID storage unit 302.

When communication device 200-b is indicated as a provision-prohibited communication device in prohibition information 304a, providing unit 306 prohibits the transmission of the communication ID of communication device 200-a to communication device 200-b.

In addition, when communication device 200-b is not indicated as a provision-permitted communication device in permission information 305a, providing unit 306 prohibits the transmission of the communication ID of communication device 200-a to communication device 200-b.

The operation is next described.

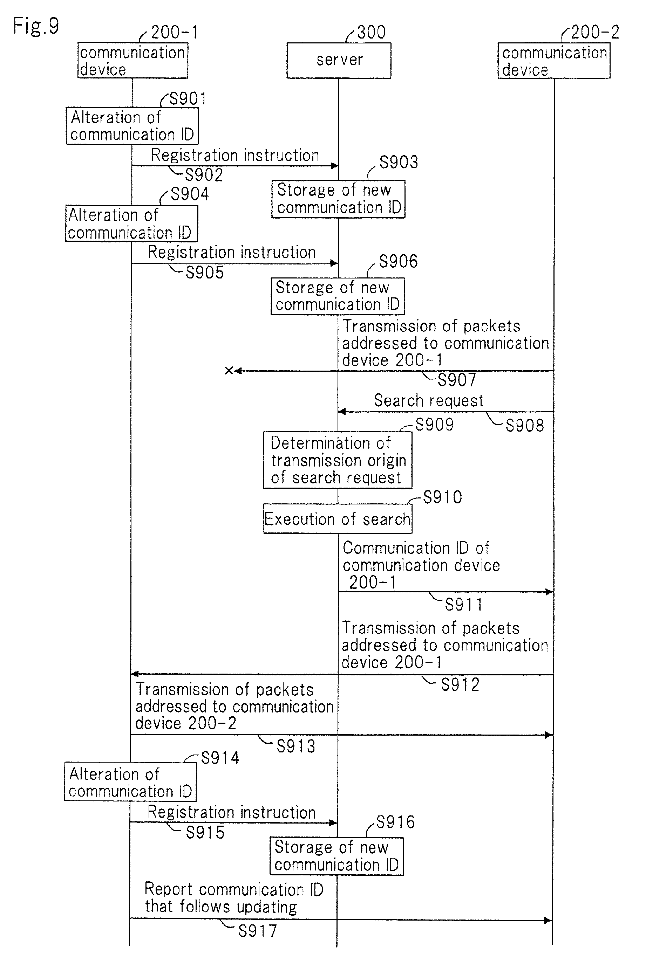

FIG. 9 is a sequence diagram for describing the operations of communication system 100. In FIG. 9, only communication device 200-1 and communication device 200-2 are shown as the plurality of communication devices 200 in the interest of simplifying the explanation. Each of communication device 200-1 and communication device 200-2 has the same configuration as communication device 200 shown in FIG. 2. In addition, of the updating operations to update the communication ID in communication device 200-1 and communication device 200-2, only the updating operation to update the communication ID in communication device 200-1 is shown in FIG. 9 for the sake of simplifying the explanation. Communication device 200-1 is an example of the first communication device and communication device 200-2 is an example of the second communication device.

In communication device 200-1, when update unit 203 updates the communication ID of communication device 200-1 (Step S 901), update unit 203 saves the communication ID of communication device 200-1 that follows updating (hereinbelow referred to as the "new communication ID"), and further, supplies the new communication ID to registration unit 204.

Upon receiving the new communication ID, registration unit 204 in communication device 200-1 reads the search ID of communication device 200-1 from storage unit 202 and generates a registration instruction (see FIG. 3) that contains the new communication ID and the search ID of communication device 200-1. Registration unit 204 in communication device 200-1 next transmits the registration instruction to server 300 by way of communication unit 201 (Step S902).

In server 300, management unit 303, having received the registration instruction by way of communication unit 301, checks whether the search ID that is indicated in the registration instruction has been registered in ID storage unit 302.

If the search ID indicated in the registration instruction has not been registered in ID storage unit 302, management unit 303 stores the search ID and the new communication ID that are indicated in the registration instruction in association with each other in ID storage unit 302 (Step S903).

On the other hand, if the search ID indicated in the registration instruction is registered in ID storage unit 302, management unit 303 updates, of the communication IDs in ID storage unit 302, the communication ID that is placed in association with the search ID indicated in the registration instruction to the new communication ID that is indicated in the registration instruction (Step S903).

Subsequently, when update unit 203 in communication device 200-1 updates the communication ID of communication device 200-1 (Step S904), registration unit 204 transmits a registration instruction that includes the new communication ID and the search ID of communication device 200-1 to server 300 by way of communication unit 201 (Step S905).

Upon receiving the registration instruction by way of communication unit 301, management unit 303 in server 300 updates, of the communication IDs in ID storage unit 302, the communication ID that is placed in association with the search ID indicated in the registration instruction to the new communication ID that is indicated in the registration instruction (Step S906).

At this point in time, control unit 205 in communication device 200-2 retains the communication ID that precedes updating of communication device 200-1 that was used in past communication with communication device 200-1.

Control unit 205 in communication device 200-2 is then assumed to use the communication ID that precedes updating of communication device 200-1 to transmit packets that designate communication device 200-1 as the communication partner (Step S907).

However, the communication ID that is used in these packets is not being used in communication device 200-1, and communication using these packets therefore breaks down.

In the present exemplary embodiment, if control unit 205 in communication device 200-2 cannot receive reception confirmation from communication device 200-1, despite the passage of a predetermined time interval after transmitting packets that designate communication device 200-1 as the communication partner, control unit 205 judges that communication with the communication partner has broken down.

Control unit 205 in communication device 200-2 next reads the search ID of communication device 200-1 that is the communication partner and the search ID of communication device 200-2 from storage unit 202 and generates a search request that includes the search ID of communication device 200-1 and the search ID of communication device 200-2.

Control unit 205 in communication device 200-2 next transmits the search request to server 300 by way of communication unit 201 (Step S908).

In server 300, upon receiving the search request by way of communication unit 301, providing unit 306 executes a judgment operation relating to the transmission origin of the search request (Step S909).

In the present exemplary embodiment, the following judgment operation is executed as Step S909.

Providing unit 306 first judges whether the search ID of the transmission origin (the search ID of communication device 200-2) that is indicated in the search request is present in search IDs 305a1 that are indicated in permission information 305a in white-list storage unit 305.

If the search ID of the transmission origin that was indicated in the search request is not present in the search IDs 305a1, providing unit 306 transmits, as a notification result to the search request, by way of communication unit 301 to the transmission origin of the search request a prohibition notification indicating that the transmission of the communication ID is prohibited.

If the search ID of the transmission origin that was indicated in the search request is present in the search IDs 305a1, providing unit 306 next judges whether the search ID of the transmission origin that was indicated in the search request is present in search IDs 304a1 that were indicated in prohibition information 304a in black-list storage unit 304.

If the search ID of the transmission origin that was indicated in the search request is present among search IDs 304a1, providing unit 306 transmits, as the notification result to the search request, a prohibition notification to the transmission origin of the search request by way of communication unit 301.

### Step S909 thus ends.

If the search ID of the transmission origin that was indicated in the search request is present among search IDs 305a1, and moreover, if the search ID of the transmission origin that was indicated in the search request is not present among search IDs 304a1, providing unit 306 executes a search operation in accordance with the search request (Step S910).

In the present exemplary embodiment, the following search operation is executed as Step S910.

Providing unit 306 first judges whether the search ID of communication device 200-1 that was indicated in the search request is present among the search IDs in ID storage unit 302.

If the search ID of communication device 200-1 that was indicated in the search request is not present among the search IDs in ID storage unit 302, providing unit 306 transmits, by way of communication unit 301 to the transmission origin of the search request as the notification result to the search request, an unregistered notification indicating that the communication ID has not been registered.

On the other hand, if the search ID of communication device 200-1 that was indicated in the search request is present among the search IDs in ID storage unit 302, providing unit 306 reads from ID storage unit 302 the communication ID of communication device 200-1 that is placed in association with the search ID of communication device 200-1 in ID storage unit 302.

### Step S910 thus ends.

Providing unit 306 next transmits by way of communication unit 301 to the transmission origin of the search request, i.e., communication device 200-2, the communication ID of communication device 200-1 as the notification result to the search request (Step S911).

FIG. 9 shows an example in which the communication ID of communication device 200-1 is transmitted as the notification result to the search request.

Upon receiving the communication ID of communication device 200-1 by way of communication unit 201, control unit 205 in communication device 200-2 uses the communication ID of communication device 200-1 that was received to transmit packets that designate communication device 200-1 as the communication partner (Step S912).

Upon receiving the packets from communication device 200-2 by way of communication unit 201, control unit 205 in communication device 200-1 transmits a reception confirmation addressed to communication device 200-2 and starts communication (Step S913).

Subsequently, when update unit 203 in communication device 200-1 updates the communication ID of communication device 200-1 while control unit 205 is communicating with communication device 200-1 (Step S914), registration unit 204 transmits to server 300 by way of communication unit 201 a registration instruction that includes the new communication ID and the search ID of communication device 200-1 (Step S915).

In server 300, upon receiving the registration instruction by way of communication unit 301, management unit 303 updates, of the communication IDs in ID storage unit 302, the communication ID that is placed in association with the search ID that was indicated in the registration instruction to the new communication ID that is indicated in the registration instruction (Step S916).

Control unit 205 in communication device 200-1 next reports the communication ID of communication device 200-1 that follows updating to communication device 200-2 that is communicating with communication device 200-1 (Step S917). Control unit 205 in communication device 200-1 may also encode the communication ID of communication device 200-1 that follows updating and report the encoded communication ID of communication device 200-1 that follows updating to communication device 200-2 that is communicating with communication device 200-1.

Control unit 205 in communication device 200-2, upon receiving the communication ID of communication device 200-1 by way of communication unit 201, transmits packets in which the communication ID of communication device 200-1 that follows updating is used to designate communication device 200-1 as the communication partner.

In the present exemplary embodiment, the process for communicating with communication device 200-1 ends when control unit 205 in communication device 200-2 is unable to receive a reception confirmation from communication device 200-1 despite the passage of the predetermined time interval from transmitting packets in Step S912.

The effect of the present exemplary embodiment is next described.

In communication device 200 of the present exemplary embodiment, update unit 203 updates the communication ID of communication device 200. When the communication ID of communication device 200 is updated, registration unit 204 registers the communication ID of communication device 200 that follows updating in association with the search ID of communication device 200 in server 300. Control unit 205 uses the search ID of the communication partner to acquire from server 300 the communication ID of the communication partner that was placed in association with the search ID of the communication partner.

As a result, the most recent communication ID is managed in server 300 in association with the search ID, and the most recent communication ID of a communication partner can be acquired from server 300 using the search ID of the communication partner.

The effect described above is also exhibited in communication device 200 that is made up of update unit 203, registration unit 204, and control unit 205.

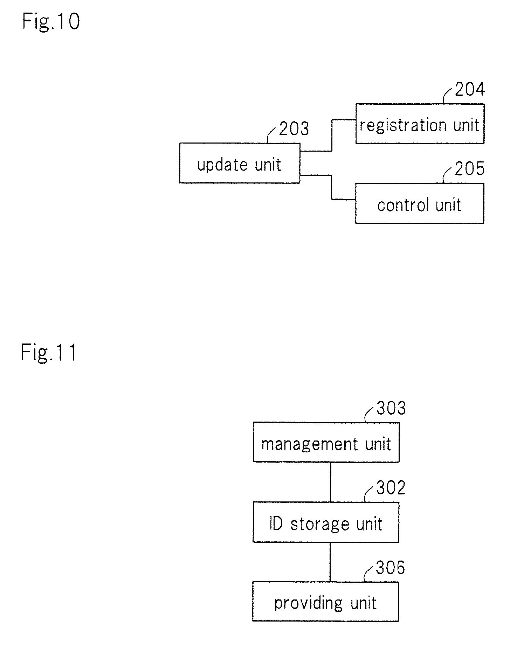

FIG. 10 shows a communication device that is made up of update unit 203, registration unit 204, and control unit 205.

In the present exemplary embodiment, control unit 205 uses the most recent communication ID of the communication partner that was acquired from server 300 to designate the communication partner and communicate with the communication partner.

As a result, communication with a communication partner can be carried out even though the communication ID of the communication partner has been updated.

In the present exemplary embodiment, when communication with a communication partner breaks down, control unit 205 uses the search ID of the communication partner to acquire the communication ID of the communication partner from server 300.

As a result, the communication ID of a communication partner can be acquired when the communication ID of the communication partner becomes necessary.

When initiating communication with a communication partner, control unit 205 may use the search ID of the communication partner to acquire the communication ID of the communication partner from server 300. In this case as well, the communication ID of the communication partner can be acquired when acquiring the communication ID of the communication partner is necessary.

Still further, in the present exemplary embodiment, when the communication ID of communication device 200 is updated while communication device 200 is engaged in communication, registration unit 204 registers the communication ID of communication device 200 that follows updating in association with the search ID of communication device 200 in server 300, and moreover, reports the communication ID of communication device 200 that follows updating to the partner with whom communication device 200 is communicating.

As a result, cutting off of continuing communication that accompanies updating of the communication ID can be prevented.

In server 300 of the present exemplary embodiment, when a registration instruction that contains the communication ID of communication device 200-1 and the identification information of the search ID of communication device 200-1 is received from communication device 200-1, management unit 303 stores the communication ID of communication device 200-1 and the search ID of communication device 200-1 in association with each other in ID storage unit 302. When providing unit 306 receives a search request that contains the search ID of communication device 200-1 from communication device 200-2, providing unit 306 transmits the communication ID of communication device 200-1 that is placed in association with the search ID of communication device 200-1 in ID storage unit 302 to communication device 200-2.

As a result, server 300 is able to manage the most recent communication ID of a communication device in association with the search ID and provide the most recent communication ID to the transmission origin of a search request. A communication device is therefore able to acquire the most recent communication ID of a communication partner from server 300.

The effects described above are also exhibited by server 300 that is made up of ID storage unit 302, management unit 303, and providing unit 306.

FIG. 11 shows a server that is made up of ID storage unit 302, management unit 303, and providing unit 306. When the server shown in FIG. 11 is used, the search ID of the transmission origin of a search request need not be contained in the search request.

In addition, in the present exemplary embodiment, when another communication ID (the communication ID that precedes updating) of communication device 200-1 is present in ID storage unit 302 when a registration instruction is received from communication device 200-1, management unit 303 updates the other communication ID (the communication ID that precedes updating) of communication device 200-1 to the communication ID of communication device 200-1 that is indicated in the registration instruction.

As a result, the communication IDs in ID storage unit 302 can be maintained in the most recent state.

In the present exemplary embodiment, moreover, black-list storage unit 304 stores prohibition information 304a that indicates communication devices to which the provision of the communication ID of communication device 200-1 is prohibited. When the transmission origin of a search request (communication device 200-2) is indicated in prohibition information 304a, providing unit 306 prohibits the transmission of the communication ID of communication device 200-1 to the transmission origin of the search request (communication device 200-2).

As a result, the provision of the communication ID of communication device 200-1 can be prohibited to communication devices for which the provision of the communication ID of communication device 200-1 is prohibited. As a result, for example, if prohibition information 304a specifies communication devices that are being used by third persons having malicious intent and if a search request is transmitted from a communication device that is being used by a third person having malicious intent, the acquisition of the communication ID of communication device 200-1 by a third person having malicious intent can be prevented.

Further, in the present exemplary embodiment, white-list storage unit 305 stores permission information 305a indicating communication devices to which the provision of the communication ID of communication device 200-1 is permitted.

When the transmission origin of a search request (communication device 200-2) is not indicated on permission information 305a, providing unit 306 prohibits transmission of the communication ID of communication device 200-1 to the transmission origin of a search request (communication device 200-2).

As a result, the provision of the communication ID of communication device 200-1 to communication devices for which the provision of the communication ID of communication device 200-1 is not permitted can be prohibited. For example, when a search request is transmitted from a communication device that is being used by a third person having malicious intent that is not indicated in permission information 305a, the acquisition of the communication ID of communication device 200-1 by the third person having malicious intent can be prevented.

In the present exemplary embodiment described hereinabove, black-list storage unit 304 may be omitted, white-list storage unit 305 may be omitted, or black-list storage unit 304 and white-list storage unit 305 may both be omitted.

Alternatively, communication device 200 may be realized by a computer. In this case, the computer reads and executes a program that is recorded on a recording medium such as a CD-ROM (Compact Disk Read Only Memory) that can be read by a computer to function as communication unit 201, storage unit 202, update unit 203, registration unit 204, and control unit 205. The recording medium is not limited to a CD-ROM and can be modified as appropriate.

Alternatively, server 300 may also be realized by a computer. In this case, the computer reads and executes a program that is recorded on a recording medium that can be read by a computer to thus function as communication unit 301, ID storage unit 302, management unit 303, black-list storage unit 304, white-list storage unit 305, and providing unit 306.

In the exemplary embodiment described hereinabove, the configuration shown in the drawings is merely an example, and the present invention is not limited to this configuration.

The invention of the present application has been described with reference to an exemplary embodiment, but the invention of the present application is not limited to the above-described exemplary embodiment. The configuration and details of the invention of the present application are open to various modifications within the scope of the invention of the present application that will be clear to one of ordinary skill in the art. This application claims the benefits of priority based on Japanese Patent Application No. 2012-061665 for which application was submitted on March 19, 2012 and incorporates by citation all of the disclosures of that application.

### Explanation of Reference Numbers

- 200, 200-1-200-n: communication device
- 201: communication unit
- 202: storage unit
- 203: update unit
- 204: registration unit
- 205: control unit
- 300: server
- 301: communication unit
- 302: ID storage unit
- 303: management unit
- 304: black-list storage unit
- 305: white-list storage unit
- 306: providing unit

## Claims

1. A communication device that communicates with a communication partner, comprising:
update means that updates communication identification information of said communication device;
registration means that, upon updating of communication identification information of said communication device, registers in a server the communication identification information of said communication device that follows updating in association with search identification information of said communication device; and
control means that uses the search identification information of said communication partner to acquire from said server communication identification information of said communication partner that has been placed in association with the search identification information of said communication partner.

2. The communication device as set forth in claim 1, wherein said control means uses the communication identification information of said communication partner to designate said communication partner in order to communicate with said communication partner.

3. The communication device as set forth in claim 2, wherein said control means, when starting communication with said communication partner or when communication with said communication partner breaks down, uses search identification information of said communication partner to acquire from said server communication identification information of the communication partner that is placed in association with search identification information of said communication partner.

4. The communication device as set forth in any one of claims 1 to 3, wherein said registration means, when communication identification information of said communication device is updated while said communication device is communicating, registers communication identification information of the communication device that follows said updating in association with search identification information of said communication device in said server, and moreover, reports the communication identification information of the communication device that follows said updating to the partner with whom said communication device is communicating.

5. A communication-purpose identification information management server that communicates with a first communication device and a second communication device, comprising:
storage means;
management means that, upon receiving from said first communication device a registration instruction that includes communication identification information of said first communication device and search identification information of said first communication device, stores the communication identification information of said first communication device in association with the search identification information of said first communication device in said storage means; and
providing means that, upon receiving from said second communication device a search request that contains search identification information of said first communication device, transmits to said second communication device communication identification information of the first communication device that is placed in association with the search identification information of said first communication device in said storage means.

6. The communication-purpose identification information management server as set forth in claim 5, wherein said management means, when having received said registration instruction and other communication identification information of said first communication device is present in said storage means, updates the other communication identification information of said first communication device to the communication identification information of the first communication device that is indicated in said registration instruction.

7. The communication-purpose identification information management server as set forth in claim 5 or 6, further comprising:
prohibition information storing means that stores prohibition information that indicates communication devices to which provision of the communication identification information of said first communication device is prohibited;
wherein said providing means, when said second communication device is indicated in said prohibition information, prohibits the transmission of communication identification information of said first communication device to said second communication device.

8. The communication-purpose identification information management server as set forth in any one of claims 5 to 7, further comprising:
permission information storing means that stores permission information that indicates communication devices to which the provision of communication identification information of said first communication device is permitted;
wherein said providing means, when said second communication device is not indicated in said permission information, prohibits the transmission of the communication identification information of said first communication device to said second communication device.

9. A communication-purpose identification information acquisition method that is a method of acquiring communication-purpose identification information in a communication device that communicates with a communication partner, comprising:
updating communication identification information of said communication device;
when communication identification information of said communication device is updated, registering in a server communication identification information of said communication device that follows updating in association with search identification information of said communication device; and
using the search identification information of said communication partner to acquire from said server communication identification information of the communication partner that is placed in association with the search identification information of said communication partner.

10. A communication-purpose identification information providing method that is a method of providing communication-purpose identification information in a communication-purpose identification information management server that communicates with a first communication device and a second communication device, comprising:
upon receiving from said first communication device a registration instruction that contains communication identification information of said first communication device and search identification information of said first communication device, storing in storage means the communication identification information of said first communication device in association with the search identification information of said first communication device; and
upon receiving from said second communication device a search request that includes the search identification information of said first communication device, transmitting to said second communication device communication identification information of the first communication device that is placed in association with the search identification information of said first communication device in said storage means.

11. A recording medium that can be read by a computer and on which is recorded a program for causing a computer to execute:
an updating procedure of updating communication identification information of said computer;
a registration procedure of, upon updating of communication identification information of said computer, registering in a server communication identification information of said computer that follows updating in association with the search identification information of said computer; and
a control procedure of using search identification information of a communication partner to acquire from said server communication identification information of the communication partner that is placed in association with the search identification information of said communication partner.

12. A recording medium that can be read by a computer and on which is recorded a program for causing a computer to execute:
a management procedure of, upon receiving from a first communication device a registration instruction that includes communication identification information of said first communication device and search identification information of said first communication device, storing the communication identification information of said first communication device in association with the search identification information of said first communication device in storage means; and
a providing procedure of, upon receiving from a second communication device a search request that includes search identification information of said first communication device, transmitting to said second communication device communication identification information of the first communication device that is placed in association with the search identification information of said first communication device in said storage means.
